# EUROPEAN PATENT APPLICATION

(11) **EP 1 460 816 A1**
(43) Date of publication of application: **22.09.2004**
(21) Application number: 03290672.9
(22) Date of filing: 17.03.2003
(51) Int. Cl.: H04L 29/06, H04L 12/18

(54) **Multichannel communication system and method**

(71) Applicant: Hewlett-Packard Development Company, L.P., Houston, TX 77070 (US)
(72) Inventor: Pedersen, Claus, 38610 Venon (FR)
(74) Representative: Lloyd, Richard Graham

(57) **Abstract**

A method of and system for associating communications between at least one client (20) and a service provider (12) over a plurality of separate communication channels (C1-C4) include identifying at the service provider (12) at least first and second separate communication channels through which communication is being effected, presenting to the at least one client (20) data representative of the identified channels by sending to the client (20) the channel identifiers (C1-C4) through their associated channels, requesting the at least one client (20) to confirm whether the identified first and second communication channels (C1-C4) are channels the at least one client (20) is using to communicate with the service provider (12) by requiring the at least one client (20) to send through at least one of said channels the identifier of the other channel, and causing the service provider (12) to associate the first and second channels (C1-C4) with a said at least one client (20) upon receipt of such confirmation.

## Description

### Field of the Invention:

The present invention relates to a system and method for providing associated multi-channel communication for use, for example, in multi-modal systems.

### Background of the Invention:

There is an increasing desire to communicate over a plurality of channels substantially simultaneously. For example, when communicating with a third party, it may be desired to communicate by voice and by data. For this purpose, the same communication channel (for example, a telephone line) for both types of communication may not be available so the two types of communication may have to be established through different channels, such as two telephone lines or a telephone line and a third party Web service provider. Similarly, it may be desired to communicate with a plurality of people on a conference basis, both by voice and data and/or video using different types of communication channels (for example, satellite, cellular system and cable). While such forms of communication can be established by the users and can be effective, they are limited by having no or virtually no association between the various channels. Thus, the channels remain separate and distinct.

While it is possible to establish such communications through a single controlling server, in such a case the communications must normally be predetermined by requiring, for example, preset communications links and/or a preset list of users.

### Summary of the Present Invention:

The present invention seeks to provide an improved communication system and method.

According to an aspect of the present invention, there is provided a method for a first entity to associate at least two channels involved in a communication session with a second entity, including the steps of: receiving at least one communication from the second entity over a first of said channels; receiving a second communication directly or indirectly identifying the first channel over the other or each other channel; and accepting a possible association between the first channel and the other or each other channel as true only following receipt of the second communication.

The method preferably includes the step of supposing an association between the first channel and at least one other channel; wherein the step of accepting a possible association involves accepting the possible association as true only following receipt of the second communication. The possible association may be proposed by the first entity, preferably in a communication over the first channel.

In the preferred embodiment, the first and second communications provide a common token. In an alternative embodiment, the method includes the step of sending a token to the second entity over the first communication channel and considering that the second communication identifies the first channel only if it includes the sent token.

It is envisaged that the first entity may be a service provider and the second entity may be a client (user). Thus, in an embodiment, the method provides for the service provider to identify the communication channels and for the client to confirm that those channels are the channels though which it is communicating, such that the channels can be associated with one another.

Advantageously, the service provider controls communication through the channels.

The channels may be identified by the first entity assigning a channel identifier to each channel and transmitting the channel identifier to the second entity.

According to another aspect of the present invention, there is provided a system for a first entity to associate at least two channels involved in a communication session with a second entity, including: at the first entity a receiver for receiving at least one communication from the second entity over a first of said channels and for receiving a second communication directly or indirectly identifying the first channel over the other or each other channel; and a processor operable to accept a possible association between the first channel and the other or each other channel as true only following receipt of the second communication.

Furthermore, as will become apparent below, a service provider does not need to have or retain any information relating to the client so it can associate different communication channels with an entity of which it has no prior knowledge. There is no need for the client entity to be pre-registered with the service provider entity. This can be particularly advantageous not only with new entities seeking to communicate with, for example, a service provider but also where the communication channels may change, such as occurs in mobile telephony, through the Internet and so on. It will also be apparent that this feature can effectively decouple a service provider from the communication channels as it does not matter to it what channels are being used.

Once the channels have been associated with one another, communication through the channels can be controlled, for example, by the service provider. For instance, the communications can be synchronised, one channel can be used to communicate control signals for controlling communication through the other channel and so on. Some examples are described below.

Moreover, it is possible to control communication between additional entities coupled to the first entity, again described in detail below. This can be useful, for example, in setting up voice conferencing facilities with simultaneous control through another channel such as via a web interface.

According to another aspect of the present invention, there is provided a method for a service provider to associate at least two channels involved in a communication session with a client, including the steps of: receiving at least one communication from the client over a first of said channels; receiving a second communication directly or indirectly identifying the first channel over the other or each other channel; supposing an association between a first channel and at least one other channel; and accepting the association as true only following receipt of the second communication.

According to another aspect of the present invention, there is provided a system for a service provider to associate at least two channels involved in a communication session with a client, including: a receiver for receiving at least one communication from the client over a first of said channels and for receiving a second communication directly or indirectly identifying the first channel over the other or each other channel; a processor operable to suppose an association between a first channel and at least one other channel; wherein the service provider is operable to accept the association as true only following receipt of the second communication.

### Description of the Drawings:

Embodiments of the present invention are described below, by way of example only, with reference to the accompanying drawings, in which:
Figure 1 is a schematic diagram of an example of communication set-up envisaged for the described embodiments of the invention;
Figure 2 is a schematic diagram of an example of communication system set-up between two users through a single provider;
Figure 3 is a flow chart showing an embodiment of association routine for the example of system shown in Figure 2;
Figure 4 is a schematic diagram of another example of channel verification arrangement; and
Figure 5 is a schematic diagram of an example of teleconferencing facility using an embodiment of the present invention.

### Description of the Preferred Embodiments:

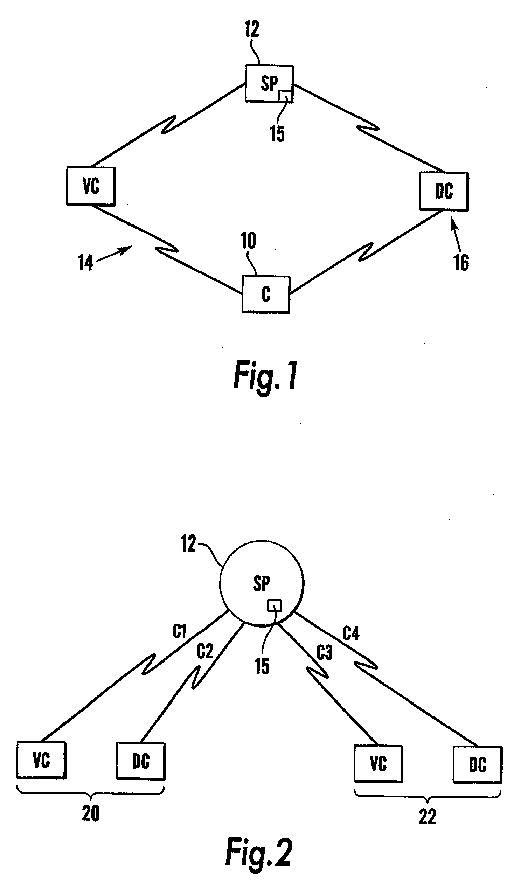

Referring to Figure 1, there is shown an example of the type of communication set-up between two entities, in this example, a client 10 and a service provider 12. In this scenario, the client 10 communicates in two modes, a voice mode and a data mode. These two modes are provided by two distinct communication channels 14, 16, which could be two separate communication systems. For example, the voice channel could be a direct telephone line or cellular communication network, and the data channel 16 could be Internet based. In the latter, the data channel 16 could pass through a web service provider and thereby may not be a direct communication channel between the client 10 and service provider 12.

A more typical scenario envisaged by the preferred embodiments allows communication with a service provider 12 by a plurality of clients 20, 22, with each client 20, 22 making multi-modal communications with the service provider 12, such as a voice connection and a data connection as envisaged in the example of Figure 1. Thus, the client 20 would use a voice channel and a data channel, as would the client 22.

The system provides for allowing the service provider 12 to associate the separate channels for each client 20, 22 for synchronisation and control purposes. The service provider 12 includes a processor 15, of any suitable type, for providing the authentication, association and control functions of the service provider 12.

In the example shown in Figure 2, the service provider 12 allocates a channel identifier to each communication channel which is operative at a particular point in time. For example, the service provider 12 could identify the four channels shown in Figure 2 as channels C1 to C4 respectively. As explained above, these channels need not be direct communication links with the clients 20, 22 but could be via an intermediary such as a Web service provider or other communication provider. As a result, the service provider 12 does not know which communication channels are associated with which particular client 20, 22 unless, of course, the clients have pre-registered with the service provider 12 or the channels C1 to C4 are predetermined.

In the preferred embodiment, the service provider 12 communicates with the clients 20, 22 through the established communication channels C1 to C4 to request that the clients themselves associate the communication channels they are using.

Briefly, in the example shown in Figure 2, upon a client establishing communication with the service provider 12, the service provider 12 returns, via one of the established communication channels, a request to indicate which other channels that client is using, if any. For example, upon establishing communication, the service provider 12 assigns the two new channels indicators C1 and C2 and informs the client 10 of this. Of course, the service provider 12 does not have the knowledge to determine whether the channels C1 and C2 are used by the same entity and therefore it sends requests back through these channels. More specifically, in this embodiment, the service provider 12 sends via the channels C1 and C2 requests for the entity at the other end to identify what other channels it is using. Upon receipt of a predetermined response, described below, the channels C1 and C2 can be associated as originating from the same client.

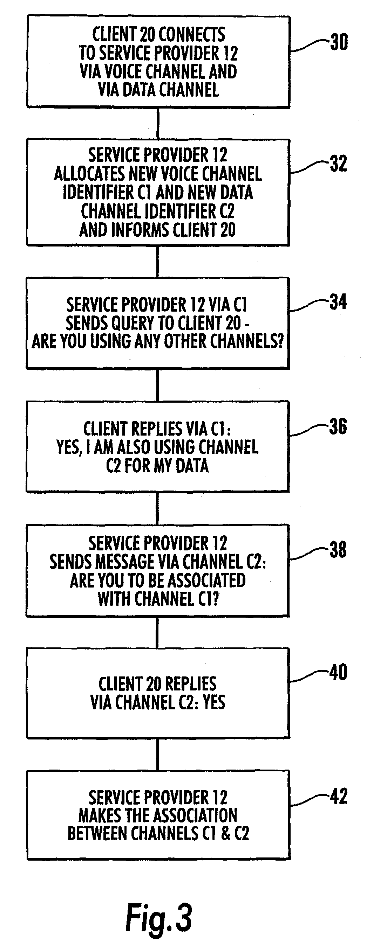

Figure 3 shows one example of association routine for the arrangement shown in Figure 2. At step 30, the client 20 connects to the service provider 12 via both a voice channel and a separate data channel.

At step 32, the service provider 12 determines the new communication channels with which it has been connected and allocates channel identifiers to these new channels. In this example, it allocates to the new voice channel the identifier C1 and to the new data channel the identifier C2. It informs the client 20 of these channel identifiers by sending appropriate messages on the individual channels. In other words, it will inform client 20 via the voice channel that that channel has been given the identifier C1 and via the data channel that that channel has been given the identifier C2.

At the step 34 the service provider 12, in one example, sends via channel C1 a query to the client 20 asking if that client is using any other channel to communicate with the service provider 12 and, if so, which channel.

At step 36, the client 20 replies through channel C1 that it is using another communication channel, namely channel C2, for its data communications. Thus, the reply is the channel identifier C2 sent through the voice channel C1.

At step 38, the service provider 12 sends a message via channel C2 to client 20 indicating that it has been advised that channels C1 and C2 are being used by client 20 and requests confirmation of this from client 20, to be sent through channel C2. At step 40, provided that this is indeed correct, client 20 would reply via channel C2 that this is the case.

Finally, at step 42, the service provider 12 makes the association between channels C1 and C2, namely that they are being used by the same client 20.

It will be apparent to the skilled person that the association could be made at step 36. However, it is preferred that the verification loop is in effect closed by the client 20 to ensure that no errors are made and that the supposed association of the channels can be accepted as true with a high degree of reliability. For example, if at step 36 client 20 either erroneously or fraudulently indicates that it is using a different channel, such as channel C4 which is being used by client 22 (in the example of Figure 2), at step 38 the service provider would send the message not via channel C2 but via channel C4, which would reach the client 22. At this stage, the client 22 can respond back to the service provider 12 stating that it is not using the channel C1. Hence, the error in association cannot be made and any association made by the service provider 12 using the described embodiments can be trusted with a high degree of reliability.

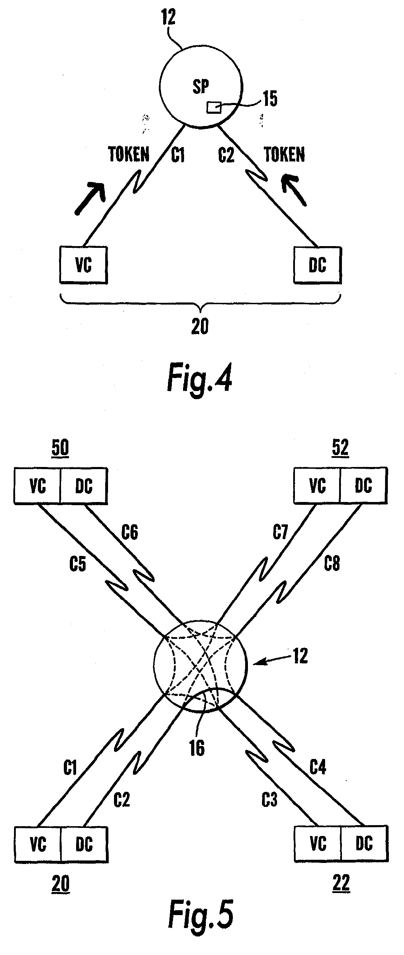

Figure 4 shows a verification routine which could be used in place of or in addition to the routine described above. In this example, the client 20 sends to the service provider 12 via both channels C1 and C2 a token known only to the client. The token can be any suitable identifier, even an identifier chosen by the client 20, such as an identification code, a phrase, a photograph or any other suitable data according to the media involved.

In another embodiment, similar to that of Figure 4, the service provider 12 sends a token to the client 20 over the first channel C1 and considers that a second communication is associated with the client 20 only if the second communication through the second channel C2 includes that token.

It will be apparent to the skilled person that the routine of associating channels can be carried out automatically by a client 20, 22 using, typically, the client's computer. Of course, if the various modes of communication (voice, data and so on) originate from the same device (for example, the client's computer), such automated verification of the channel being used can be achieved particularly readily.

Figure 5 shows an example in which the service provider 12 provides a conferencing facility between four clients 20, 22, 50 and 52, which facility, in this example, includes both voice communication and data communication. Again, in this example, each client is using different communication channels for its voice and data communications and, as explained above, these channels can be provided through a variety of different routes, such as a direct telephone link, an Internet-based link, a mobile telephone link and so on. Through the association routine described above, the service provider 12 has associated the correct channels with the correct clients. By making this association, the service provider 12 is able to control the communications between the clients 20, 22, 50 and 52. This can be particularly important when wishing to synchronise voice communications, data communications or video communications and so on. Furthermore, since the service provider 12 reliably knows which channels are being used by which client, this can allow a certain degree of control between the various clients 20, 22, 50 and 52. In the example shown in Figure 5, the clients 20 and 22 have established a data private link 60 between themselves through the service provider 12 to exchange, for example, confidential data which they do not wish to share with the other two clients 50 and 52. This can be particularly advantageous in negotiations where some or all of the clients are remote from one another and yet wish from time to time to be able to communicate on a confidential basis.

Of course, although the examples described above relate to multi-modal communications, this need not necessarily be the case. For example, a client may wish to communicate in a single mode, for example, voice, data, video or the like through two different communication channels which are nevertheless associated. This could be particularly useful if one of those channels is to be set up as a control channel for controlling the communication through the other channel. This might be desired, for example, when transmitting video images and so on.

## Claims

1. A method for a first entity (12) to associate at least two channels (C1-C4) involved in a communication session with a second entity (10), including the steps of:
receiving at least one communication from the second entity (10) over a first of said channels (C1-C4);
receiving a second communication directly or indirectly identifying the first channel over the other or each other channel (C1-C4); and
accepting a possible association between the first channel and the other or each other channel as true only following receipt of the second communication.

2. A method according to claim 1, including the step of supposing an association between the first channel and at least one other channel (C1-C4); wherein the step of accepting a possible association involves trusting the supposed association as true only following receipt of the second communication.

3. A method according to claim 2, wherein the supposed association is proposed by the first entity (12).

4. A method according to claim 2, wherein the supposed association is proposed by the first entity (12) in a communication over the first channel.

5. A method according to any preceding claim, wherein the first and second communications provide a common token.

6. A method according to any one of claims 1 to 4, including the step of sending a token to the second entity (10) over the first communication channel and considering that the second communication identifies the first channel only if it includes the sent token.

7. A method according to any preceding claim, wherein the first entity is a service provider (12) and the second entity is a client (10).

8. A method according to claim 7, wherein the service provider (12) controls communication through the channels (C1-C4).

9. A method according to any preceding claim, wherein the channels are identified by the first entity (12) assigning a channel identifier to each channel and transmitting the channel identifier to the second entity (10).

10. A method according to claim 9, wherein the second entity (10) is operable to advise the first entity (12) which channel identifiers are related to the communication channels it is using, said channel identifiers being used in said first and second communications.

11. A system for a first entity (12) to associate at least two channels involved in a communication session with a second entity (10), including:
at the first entity a receiver for receiving at least one communication from the second entity over a first of said channels (C1-C4) and for receiving a second communication directly or indirectly identifying the first channel over the other or each other channel (C1-C4); and
a processor operable to accept a possible association between the first channel and the other or each other channel as true only following receipt of the second communication.

12. A system according to claim 11, including a processor operable to suppose an association between the first channel (C1-C4) and at least one other channel and wherein the processor of the first entity is operable to trust the supposed association as true only following receipt of the second communication.

13. A system according to claim 12, wherein the supposing processor is the processor of the first entity.

14. A system according to claim 12, wherein the supposed association is proposed by the first entity in a communication over the first channel.

15. A system according to any one of claims 11 to 14, wherein the first and second communications provide a common token.

16. A system according any one of claims 11 to 14, wherein the first entity (12) is operable to send a token to the second entity over the first communication channel and wherein the first entity processor is operable to consider that the second communication identifies the first channel only if it includes the sent token.

17. A system according any one of claims 11 to 16, wherein the first entity is a service provider and the second entity is a client.

18. A system according to any one of claims 11 to 17, wherein said system is incorporated in the first entity (12).
